# EUROPEAN PATENT SPECIFICATION

(11) **EP 4 332 875 B1**
(45) Date of publication and mention of the grant of the patent: **04.11.2026**
(21) Application number: 22193590.1
(22) Date of filing: 02.09.2022
(51) Int. Cl.: G06T 3/00

(54) **METHOD AND APPARATUS FOR PROCESSING IMAGE DATA**
VERFAHREN UND VORRICHTUNG ZUR VERARBEITUNG VON BILDDATEN
PROCÉDÉ ET APPAREIL DE TRAITEMENT DE DONNÉES D'IMAGE

(43) Date of publication of application: 06.03.2024
(73) Proprietor: Bayerische Motoren Werke Aktiengesellschaft, 80809 München (DE)
(72) Inventor: Marcos-Ramiro, Alvaro, 81541 München (DE); Jach, Victor Stefan, 80687 München (DE)

(56) References cited:
- AVISHKAR SAHA ET AL: "Translating Images into Maps", ARXIV.ORG, CORNELL UNIVERSITY LIBRARY, 201 OLIN LIBRARY CORNELL UNIVERSITY ITHACA, NY 14853, 3 October 2021 (2021-10-03), XP091071524
- RODDICK THOMAS ET AL: "Predicting Semantic Map Representations From Images Using Pyramid Occupancy Networks", 2020 IEEE/CVF CONFERENCE ON COMPUTER VISION AND PATTERN RECOGNITION (CVPR), IEEE, 13 June 2020 (2020-06-13), pages 11135 - 11144, XP033805072, DOI: 10.1109/CVPR42600.2020.01115
- SHI GONG ET AL: "GitNet: Geometric Prior-based Transformation for Birds-Eye-View Segmentation", ARXIV.ORG, CORNELL UNIVERSITY LIBRARY, 201 OLIN LIBRARY CORNELL UNIVERSITY ITHACA, NY 14853, 21 July 2022 (2022-07-21), XP091276532
- THOMAS RODDICK ET AL: "Orthographic Feature Transform for Monocular 3D Object Detection", ARXIV.ORG, CORNELL UNIVERSITY LIBRARY, 201 OLIN LIBRARY CORNELL UNIVERSITY ITHACA, NY 14853, 20 November 2018 (2018-11-20), XP080937020

## Description

The present disclosure relates to a method for processing image data captured by a camera in a vertical image plane, and to a data processing apparatus configured to perform the method at least in part. Additionally or alternatively, a computer program and/or a computer readable medium is provided with the method.

In the field of visual vision for automated driving in motor vehicles, 3D perception using single cameras as input (e.g., to detect and identify the objects in the scene in 3D or to find a 3D drivable path) is well known. For this purpose, for example, the Ortographic Feature Transform from Roddick (Roddick, Thomas, Alex Kendall, and Roberto Cipolla. "Orthographic feature transform for monocular 3d object detection." arXiv preprint arXiv:1811.08188 (2018)), which transforms image features into a Bird's Eye View (BEV). More specifically, Roddick concerns an orthographic feature transformation method for 3D monocular object recognition. An approach for extracting 3D bounding boxes from monocular images is described. The algorithm used for this purpose includes five main components, namely (1) a front-end ResNet feature extractor that extracts multi-scale image-based feature maps from an input image, (2) an orthographic feature transformation that converts the image-based feature maps at each scale into a bird's-eye view orthographic representation, (3) a top-down network consisting of a set of ResNet residual units that processes the bird's-eye view feature maps in a manner invariant to the perspective effects observed in the image, (4) a set of output heads that generate a confidence score, position offset, dimension offset, and orientation vector for each object class and location on a footprint, and (5) a non-maximum suppression and decoding stage that identifies peaks in the confidence maps and generates discrete bounding box predictions. The first element of the proposed architecture (see (1) above: feature extraction) is a convolutional feature extractor that generates a hierarchy of multi-scale 2D feature maps from the raw input image. These features encode information about low-level structures in the image that form the basic components used by the top-down network to construct an implicit 3D representation of the scene. The front-end network is also responsible for deriving depth information based on the size of image features, as subsequent stages of the architecture aim to eliminate scale mismatches. In order to infer the 3D world without perspective effects, feature extraction is followed by an orthographic feature transform, which first involves mapping feature maps extracted in image space to orthographic feature maps in space, called an orthographic feature transform (OFT). The goal of the OFT is to transform the 3D voxel feature map g(x, y, z) ∈ *Rⁿ* with relevant n-dimensional features from the image-based feature map f(u, v) ∈ *Rⁿ* extracted by the front-end feature extractor (see (1) above). The voxel map is defined over a uniformly distributed 3D grid G fixed at a distance y0 below the camera at the ground plane and having dimensions W, H, D and a voxel size of r. The voxel map is then extracted by the front-end feature extractor. For a given voxel grid position (x, y, z) ∈ G, the voxel feature g (x, y, z) is obtained by accumulating features over the area of the image feature map f corresponding to the 2D projection of the voxel. In general, each voxel, which is a cube of size r, is projected onto a hexagonal region in the image plane. This is done by a rectangular bounding box with upper left and lower right corners (*u*₁, *v*₁) and (*u*₂, *v*₂), which are given by ${u}_{1} = f \frac{x - 0.5 r}{z + 0.5 \frac{x}{\left|x\right|} r} + {c}_{u} , {v}_{1} = f \frac{y - 0.5 r}{z + 0.5 \frac{y}{\left|y\right|} r} + {c}_{v} ,$ ${u}_{2} = f \frac{x + 0.5 r}{z - 0.5 \frac{x}{\left|x\right|} r} + {c}_{u} , {v}_{2} = f \frac{y + 0.5 r}{z - 0.5 \frac{y}{\left|y\right|} r} + {c}_{v}$ where f is the focal length of the camera and (*cᵤ, cᵥ*) is the principal point. A feature can then be assigned to the corresponding position in the voxel feature map g by so-called average pooling over the bounding box of the projected voxel in the image feature map f: $g \left(x, y, z\right) = \frac{1}{\left({u}_{2}-{u}_{1}\right) \left({v}_{2}-{v}_{1}\right)} {\sum }_{u = {u}_{1}}^{{u}_{2}} {\sum }_{v = {v}_{1}}^{{v}_{2}} f \left(u, v\right)$

The resulting voxel feature map g already provides a representation of the scene that is free from the effects of perspective projection. However, deep neural networks operating on large voxel grids tend to be extremely memory intensive. Since there is particular interest in applications, such as autonomous driving, where most objects are anchored on the 2D ground plane, the problem can be made more manageable by reducing the 3D voxel feature map to a third, two-dimensional representation called the orthographic feature map h (x, z). The orthographic feature map is obtained by summing voxel features along the vertical axis after multiplication by a set of learned weight matrices W (y) ∈ *R^{n x n}* are obtained: $h \left(x, z\right) = {\sum }_{y = {y}_{0}}^{{y}_{0} + H} W \left(y\right) g \left(x, y, z\right)$

Converting to an intermediate voxel representation before collapsing into the final orthographic feature map has the advantage of preserving information about the vertical structure of the scene. This proves essential for downstream tasks such as estimating the height and vertical position of object bounding boxes. A major challenge with the above approach is the need to aggregate features over a very large number of regions. A typical voxel grid generates about 150k bounding boxes, which is far beyond the ~2k regions of interest used by the Faster R-CNN architecture, for example. To facilitate pooling over such a large number of regions, a fast average pooling operation based on integral images is used. An integral image, or in this case an integral feature map F, is constructed from an input feature map the recursive relation $F \left(u, v\right) = f \left(u, v\right) + F \left(u-1,v\right) + F \left(u,v-1\right) - F \left(u-1,v-1\right)$

Given the integral feature map F, the initial feature g (x, y, z), which is the feature given by the bounding box coordinates (*u*₁, v₁) and (*u*₂, *v*₂) (see first equation above), is given by $g \left(x, y, z\right) = \frac{F \left({u}_{1}, {v}_{1}\right) + F \left({u}_{2}, {v}_{2}\right) - F \left({u}_{1}, {v}_{2}\right) - F \left({u}_{2}, {v}_{1}\right)}{\left({u}_{2}-{u}_{1}\right) \left({v}_{2}-{v}_{1}\right)}$

The complexity of this pooling operation is independent of the size of each region, making it highly suitable for use in automated driving, where the size and shape of regions varies significantly depending on whether the voxel is close to or far from the camera. The pooling operation is also fully differentiable with respect to the original feature map f and can therefore be used as part of an end-to-end Deep Learning framework.

If the approach described above or similar approaches are used in the motor vehicle, they are usually quantized to improve runtime speed and memory consumption by a large factor. This means that the parameters and operations are converted from floating point precision (32 bits) to integers with 8 or 16 bit precision. The OFT transformation uses integral images as an intermediate step. More specifically, the OFT uses integral images to efficiently obtain the summed feature values contained in image regions of different sizes. This is because when BEV cells are projected into the image, the projection has different sizes depending on the distance between a particular cell and the camera. Since integral images are an accumulative sum over two axes, once this accumulation exceeds the maximum value available for int8 (8 bits) or int16 (16 bits), overflow occurs and artifacts and incorrect results are produced. This makes the OFT unusable when the models are quantized.

Document "Translating Images into Maps" by Saha et. al and published by Cornell University in 2021, discloses instantaneous mapping and converting images to a top-down view of the world, as a translation problem. A novel form of transformer network can be used to map from images and video directly to an overhead map or bird's-eye-view (BEV) of the world, in a single end-to-end network. Assuming a 1-1 correspondence between a vertical scanline in the image, and rays passing through the camera location in an overhead map. Enables formulating map generation from an image as a set of sequence-to sequence translations. Posing the problem as translation allows the network to use the context of the image when interpreting the role of each pixel. This constrained formulation, based upon a strong physical grounding of the problem, leads to a restricted transformer network that is convolutional in the horizontal direction only.

Document "Predicting Semantic Map Representations from Images using Pyramid Occupancy Networks" by Thomas et. al. and published in IEEE Conference on Computer Vision and Pattern Recognition (CVPR) 2020 discloses a simple, unified approach for estimating maps directly from monocular images using a single end-to-end deep learning architecture. For the maps a semantic Bayesian occupancy grid framework is adopted, allowing the trivial accumulation of information over multiple cameras and timesteps.

Document "GitNet: Geometric Prior-based Transformation for Birds-Eye-View Segmentation" by Gong et. al. and published in European Conference on Computer Vision (ECCV) 2022, discloses a two-stage Geometry Prior-based Transformation framework named GitNet, consisting of (i) the geometry-guided pre-alignment and (ii) ray based transformer. In the first stage, the BEV segmentation is decoupled into the perspective image segmentation and geometric prior-based mapping, with explicit supervision by projecting the BEV semantic labels onto the image plane to learn visibility-aware features and learnable geometry to translate into BEV space. Second, the pre-aligned coarse BEV features are further deformed by ray-based transformers to take visibility knowledge into account.

Against the background of this prior art, the task of the present disclosure is to disclose an apparatus and/or a method, each of which is suitable for enriching the prior art.

The task is solved by the features of the independent claim. The subclaims deal with preferred further embodiments of the invention.

Thereafter, the task is solved by methods for processing image data recorded by means of one, optionally single, camera in a vertical image plane.

The method may be a computer-implemented method, i.e., one, more, or all steps of the method may be performed at least in part by a data processing device or computer.

The method may also be referred to as a method for transforming image data of a vertical image plane into image data of a horizontal image plane. The vertical image plane may also be referred to as the image plane. The horizontal image plane may also be referred to as the bird's-eye view (BEV).

The method comprises extracting multiple feature maps with different resolutions from the image data captured by means of the camera in the vertical image plane using a feature extractor.

The feature extractor, which can also be referred to as the backbone, can be a Convolutional Neural Network (CNN). The extracted features can also be referred to as image-based features. The feature map corresponds to the image layer.

The method includes selecting one of the extracted feature maps as a function of a position of a portion of the image data in a horizontal image plane relative to the camera.

The method includes transforming the portion of image data captured in the vertical image plane from the vertical image plane to image data in the horizontal image plane based on the selected feature map.

That is, depending on where the portion of the extracted feature map appears in the horizontal plane, the resolution of the extracted feature map is adjusted. Adjusting can include lowering or decreasing the resolution or using the original resolution.

Transforming can also be called converting. This can be done in a single step or in several partial steps. It is conceivable that first the feature map is converted into a 3D environment and then a conversion into the horizontal image plane is performed from the 3D environment.

Possible further developments of the above process are explained in detail below.

The method may be performed for at least a portion of the image data acquired in the vertical image plane until a substantially true-to-scale image of the portion in the horizontal image plane is obtained.

Optionally, the entire captured image or all image data can be converted to bird's eye view.

In general, it should be noted that the term "part" can also be understood to mean a "partial area" or "cell" which may have a predefined size or dimensions, optionally a rectangular shape. A "section" or "area" or "portion", on the other hand, has or consists of several of these parts. All of the sections together make up the image data as a whole, i.e., the image data can be subdivided into the sections, which in turn can be subdivided into the parts. The parts can be latticed over the image data. Both the parts and the image data correspond to or represent a respective area in the real world.

The resolution may increase as the distance of the portion of the image data captured in the vertical image plane in the horizontal image plane from the camera increases.

In other words, those portions of the Bird's-eye view that are located close to the camera can be determined from a low resolution feature map, whereas those portions of the Bird's-eye view that are located farther from the camera can be determined from a high resolution feature map. The resolution can be adjusted in steps depending on the position of the part of the image data captured in the vertical image plane in the horizontal image plane relative to the camera.

In other words, one feature map each of a certain resolution can be generated for certain sections of the Bird's-eye view, which are then used for all parts of the Bird's-eye view arranged in this section. This results in a pyramid-like structure with several feature maps of different resolutions.

The resolution is adjusted so that only a single pixel access is required to transform the portion of the image data captured in the vertical image plane from the vertical image plane to the horizontal image plane.

The method may include controlling a driving assistance system of a motor vehicle based on the image data in the horizontal image plane.

The above method offers a number of advantages over the conventional methods described at the beginning. In detail, since it is often not possible to use integral images when quantizing models for the reasons mentioned above, the method can be used to create a feature map at multiple resolutions and thus replace the summed feature values within variable size regions with pixel accesses in these feature maps. Pixel accesses to lower resolutions can thus be used to obtain the values of the closer parts or BEV cells (since the area of the cells projected into the horizontal plane is comparatively large), and higher resolutions can be used to obtain the values of the more distant BEV cells (since the area of the cells projected into the horizontal plane is comparatively small). In this way, the problem of integral image computation can be reformulated into a problem of image resizing and pixel access, which are handled by the available quantizable operations. This greatly facilitates the application in vehicles.

Furthermore, a data processing device, e.g. comprising a control unit for a motor vehicle, is provided, wherein the data processing device is adapted to at least partially execute the method described above.

The control unit may be configured to control automated driving of a motor vehicle based on the image data obtained with the method in the horizontal image plane. This may include path planning or a trajectory to be followed for the motor vehicle.

The control unit can be part of or represent a driving assistance system. The control unit can, for example, be an electronic control unit (ECU). The electronic control unit can be an intelligent processor-controlled unit that can communicate with other modules, e.g. via a central gateway (CGW), and that can form the vehicle electrical system, e.g. together with telematics control units, via fieldbuses such as the CAN bus, LIN bus, MOST bus and FlexRay or via automotive Ethernet. It is conceivable that the control unit controls functions relevant to the driving behavior of the motor vehicle, such as the engine control system, the power transmission, the braking system and/or the tire pressure control system. In addition, driver assistance systems such as a parking assistant, adaptive cruise control (ACC), a lane departure warning system, a lane change assistant, traffic sign recognition, light signal recognition, a start-up assistant, a night vision assistant and/or an intersection assistant can be controlled by the control unit.

Furthermore, a motor vehicle comprising the data processing device described above is provided. The motor vehicle can have a camera, in particular a front camera, which is connected to the data processing device and outputs image data recorded by means of the camera in a vertical image plane.

The motor vehicle may be a passenger car, especially an automobile, or a commercial vehicle, such as a truck.

The motor vehicle can be designed to take over longitudinal guidance and/or lateral guidance at least partially and/or at least temporarily during automated driving of the motor vehicle. Automated driving can be carried out in such a way that the movement of the motor vehicle is (largely) autonomous.

The motor vehicle can be an autonomy level 0 motor vehicle, i.e. the driver takes over the dynamic driving task, even if supporting systems (e.g. ABS or ESP) are present.

The motor vehicle can be an autonomy level 1 motor vehicle, i.e., have certain driver assistance systems that support the driver in operating the vehicle, such as adaptive cruise control (ACC).

The motor vehicle can be an autonomy level 2 vehicle, i.e. it can be partially automated in such a way that functions such as automatic parking, lane keeping or lateral guidance, general longitudinal guidance, acceleration and/or braking are performed by driver assistance systems.

The motor vehicle can be an autonomy level 3 motor vehicle, i.e. conditionally automated in such a way that the driver does not have to monitor the vehicle system throughout. The motor vehicle independently performs functions such as triggering the turn signal, changing lanes and/or keeping in lane. The driver can turn his attention to other things, but is prompted by the system to take over the lead within a warning time if necessary.

The motor vehicle can be an autonomy level 4 motor vehicle, i.e. so highly automated that the driving of the vehicle is permanently taken over by the system vehicle. If the driving tasks are no longer mastered by the system, the driver can be asked to take over.

The motor vehicle may be an autonomy level 5 motor vehicle, i.e., so fully automated that the driver is not required to perform the driving task. No human intervention is required other than setting the destination and starting the system. The motor vehicle can operate without a steering wheel or pedals.

What has been described above with reference to the method and the data processing device applies analogously to the motor vehicle and vice versa.

Further provided is a computer program comprising instructions which, when the program is executed by a computer, cause the computer to at least partially execute the method described above.

A program code of the computer program may be in any code, especially in a code suitable for control systems of motor vehicles.

What has been described above with reference to the process and the motor vehicle also applies analogously to the computer program and vice versa.

Further provided is a computer-readable medium, in particular a computer-readable storage medium. The computer-readable medium comprises instructions which, when the instructions are executed by a computer, cause the computer to at least partially execute the method described above.

That is, a computer-readable medium comprising a computer program defined above may be provided.

The computer-readable medium can be any digital data storage device, such as a USB flash drive, hard drive, CD-ROM, SD card, or SSD card.

The computer program does not necessarily have to be stored on such a computer-readable storage medium in order to be made available to the motor vehicle, but may also be obtained externally via the Internet or otherwise.

What has been described above with reference to the method, the data processing device, the motor vehicle and the computer program also applies analogously to the computer-readable medium and vice versa.

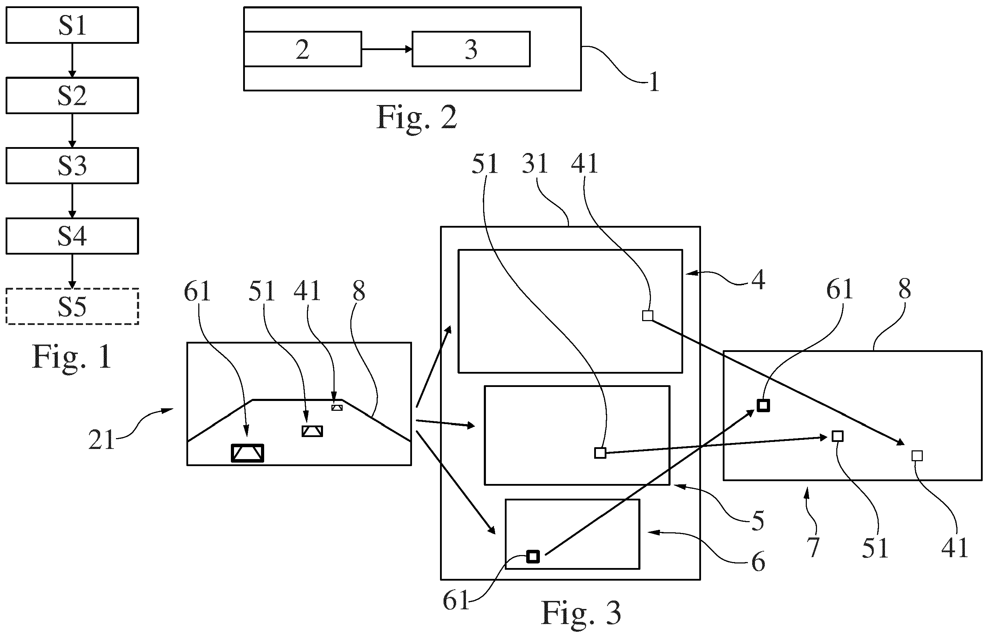

An embodiment is described below with reference to Figures 1 and 2.
- Fig. 1: shows a schematic flowchart of a method for processing image data captured by a camera in a vertical image plane,
- Fig.: 2shows a camera and a controller connected to the camera and configured to perform the method, and
- Fig. 3: shows schematically the image data to which the method is applied.

As can be seen from Figure 1, the method for processing the image data recorded by the camera in the vertical image plane essentially comprises four steps S1 - S4. The motor vehicle 1 in which the method is carried out has a front camera 2 and a control unit 3 connected thereto for carrying out the method.

In a first step S1 of the method, a feature map 4 is extracted from the image data 21 recorded by means of the camera 2 in one of the vertical image planes by means of a feature extractor 31 operated by the control unit 3.

In a second step S2 of the method, a resolution of the extracted feature map 4 is adjusted by means of the control unit 3 so that two feature maps 5, 6 with reduced resolution are obtained. The resolution gradually increases as the distance of the partial area 41, 51, 61 of the image data 7 in the horizontal plane from the camera 2 increases. For example, one of these two feature maps 5 may have a resolution of 66% of the original resolution of feature map 4 and the other of the two feature maps 6 may have, for example, a resolution of 50% of the original resolution of feature map 4.

In a third step S3 of the method, the control unit 3 selects one of the feature maps 4 - 6 as a function of a position of a part or a partial area 41, 51, 61 of the image data in a horizontal image plane 7 relative to the camera 2. For this purpose, an (optionally static) assignment of the (or all, only three being shown by way of example in Figure 3) partial areas or cells 41, 51, 61 to the respective feature map 4 - 6 is stored in the control unit 3.

In a fourth step S4 of the method, the control unit 3 transforms the respective partial area 41, 51, 61 of the image data from the vertical image plane to the horizontal image plane 7 based on the respective selected feature map 4 - 6.

The third and fourth steps S3, S4 of the method are thereby carried out for a section 8 of the image data 21 recorded by means of the camera 2 with a vertical image plane until a substantially true-to-scale image of the section 8 in the horizontal plane 7 is obtained.

The resolution of the feature maps 4 - 6 is selected in such a way that only a single pixel access is required to transform the respective partial area 41, 51, 61 of the image data 21 from the vertical image plane to the horizontal image plane.

In an optional fifth step S5 of the method, a control of a (not shown) driving assistance system of the motor vehicle 1 is performed by the control unit 3 based on the image data 7 obtained by steps S1 - S4 in the horizontal image plane.

### List of reference signs

1 Motor vehicle
2Camera
21Image data in the vertical image plane
3Controller
4 - 6 Feature cards
41 - 61 Subareas or parts to be transformed in the vertical image plane and their equivalents in the horizontal image plane
7Image data in the horizontal image plane
S1 - S5Steps of the procedure

## Claims

1. A computer-implemented method for processing image data (21) taken by means of a camera (2) in a vertical image plane, wherein the method comprises:
extracting a plurality of feature maps (4 - 6) with different resolutions from the image data captured by means of the camera (2) in the vertical image plane by means of a feature extractor (31), which is a convolutional neural network,
selecting a feature map from the extracted plurality of feature maps (4-6) based on a position of a portion (41-61) of the image data (21) in a horizontal image plane relative to the camera (2),
transforming, using an orthographic feature transform, the portion (41 - 61) of image data (21) recorded in the vertical image plane from the vertical image plane to image data (7) in the horizontal image plane based on the selected feature map (4 - 6),
**characterized in that** the resolution of the selected feature map is adapted such that only a single pixel access in the selected feature map is required to transform the portion (41 - 61) of the image data (21) recorded in the vertical image plane from the vertical image plane to the horizontal image plane.

2. The method according to claim 1, wherein the different resolutions of the plurality of feature maps (4 - 6) increase with increasing distance of the positions of the portions (41 - 61) of the image data (21) recorded in the vertical image plane in the horizontal image plane from the camera (2).

3. method according to any one of claims 1 to 2, wherein the resolution of the selected feature map is adapted stepwise based on the position of the portion (41 - 61) of the image data (21) recorded in the vertical image plane in the horizontal image plane relative to the camera (2).

4. method according to any one of claims 1 to 3, wherein the method comprises controlling a driving assistance system of a motor vehicle (1) based on the image data (7) in the horizontal image plane.

5. A data processing device (3), configured to perform the method according to any one of claims 1 to 4.

6. Motor vehicle (1) comprising the data processing device (3) according to claim 7.

7. A computer program comprising instructions which, when the program is executed by a computer, cause the computer to perform the method of any one of claims 1 to 4.

8. A computer-readable medium comprising instructions which, when the instructions are executed by a computer, cause the computer to perform the method of any one of claims 1 to 4.

## Patentansprüche

1. Computerimplementiertes Verfahren zur Verarbeitung von Bilddaten (21), die mittels einer Kamera (2) in einer vertikalen Bildebene aufgenommen wurden, wobei das Verfahren umfasst:
Extrahieren einer Vielzahl von Merkmalskarten (4 - 6) mit unterschiedlichen Auflösungen aus den mittels der Kamera (2) in der vertikalen Bildebene aufgenommenen Bilddaten mittels eines Merkmalsextraktors (31), welcher ein konvolutionales neuronales Netzwerk ist,
Auswählen einer Merkmalskarte aus der extrahierten Vielzahl von Merkmalskarten (4-6) basierend auf einer Position eines Abschnitts (41 - 61) der Bilddaten (21) in einer horizontalen Bildebene relativ zur Kamera (2),
Transformieren, unter Verwendung einer orthographischen Merkmalstransformation, des Abschnitts (41 - 61) der in der vertikalen Bildebene aufgezeichneten Bilddaten (21) von der vertikalen Bildebene zu Bilddaten (7) in der horizontalen Bildebene basierend auf der ausgewählten Merkmalskarte (4 - 6),
**dadurch gekennzeichnet, dass** die Auflösung der ausgewählten Merkmalskarte derart angepasst ist, dass nur ein einziger Pixelzugriff in der ausgewählten Merkmalskarte erforderlich ist, um den Abschnitt (41 - 61) der in der vertikalen Bildebene aufgezeichneten Bilddaten (21) von der vertikalen Bildebene zur horizontalen Bildebene zu transformieren.

2. Verfahren nach Anspruch 1, wobei die unterschiedlichen Auflösungen der Vielzahl von Merkmalskarten (4 - 6) mit zunehmendem Abstand der Positionen der Abschnitte (41 - 61) der in der vertikalen Bildebene aufgezeichneten Bilddaten (21) in der horizontalen Bildebene von der Kamera (2) zunehmen.

3. Verfahren nach einem der Ansprüche 1 bis 2, wobei die Auflösung der ausgewählten Merkmalskarte schrittweise basierend auf der Position des Abschnitts (41 - 61) der in der vertikalen Bildebene aufgezeichneten Bilddaten (21) in der horizontalen Bildebene relativ zur Kamera (2) angepasst wird.

4. Verfahren nach einem der Ansprüche 1 bis 3, wobei das Verfahren das Steuern eines Fahrassistenzsystems eines Kraftfahrzeugs (1) basierend auf den Bilddaten (7) in der horizontalen Bildebene umfasst.

5. Datenverarbeitungsvorrichtung (3), konfiguriert zur Durchführung des Verfahrens nach einem der Ansprüche 1 bis 4.

6. Kraftfahrzeug (1), umfassend die Datenverarbeitungsvorrichtung (3) nach Anspruch 7.

7. Computerprogramm, umfassend Anweisungen, die, wenn das Programm von einem Computer ausgeführt wird, den Computer veranlassen, das Verfahren nach einem der Ansprüche 1 bis 4 durchzuführen.

8. Computerlesbares Medium, umfassend Anweisungen, die, wenn die Anweisungen von einem Computer ausgeführt werden, den Computer veranlassen, das Verfahren nach einem der Ansprüche 1 bis 4 durchzuführen.

## Revendications

1. Procédé mis en œuvre par ordinateur pour traiter des données d'image (21) prises au moyen d'une caméra (2) dans un plan d'image vertical, le procédé comprenant :
l'extraction d'une pluralité de cartes de caractéristiques (4 - 6) avec différentes résolutions à partir des données d'image capturées au moyen de la caméra (2) dans le plan d'image vertical au moyen d'un extracteur de caractéristiques (31), qui est un réseau neuronal convolutif,
la sélection d'une carte de caractéristiques parmi la pluralité extraite de cartes de caractéristiques (4 - 6) sur la base d'une position d'une portion (41 - 61) des données d'image (21) dans un plan d'image horizontal par rapport à la caméra (2),
la transformation, en utilisant une transformation de caractéristiques orthographique, de la portion (41 - 61) des données d'image (21) enregistrées dans le plan d'image vertical du plan d'image vertical vers des données d'image (7) dans le plan d'image horizontal sur la base de la carte de caractéristiques sélectionnée (4 - 6),
**caractérisé en ce que** la résolution de la carte de caractéristiques sélectionnée est adaptée de telle sorte qu'un seul accès à un pixel dans la carte de caractéristiques sélectionnée est requis pour transformer la portion (41 - 61) des données d'image (21) enregistrées dans le plan d'image vertical du plan d'image vertical vers le plan d'image horizontal.

2. Procédé selon la revendication 1, dans lequel les différentes résolutions de la pluralité de cartes de caractéristiques (4 - 6) augmentent avec une distance croissante des positions des portions (41 - 61) des données d'image (21) enregistrées dans le plan d'image vertical dans le plan d'image horizontal par rapport à la caméra (2).

3. Procédé selon l'une quelconque des revendications 1 à 2, dans lequel la résolution de la carte de caractéristiques sélectionnée est adaptée par étapes sur la base de la position de la portion (41 - 61) des données d'image (21) enregistrées dans le plan d'image vertical dans le plan d'image horizontal par rapport à la caméra (2).

4. Procédé selon l'une quelconque des revendications 1 à 3, dans lequel le procédé comprend la commande d'un système d'assistance à la conduite d'un véhicule à moteur (1) sur la base des données d'image (7) dans le plan d'image horizontal.

5. Dispositif de traitement de données (3), configuré pour effectuer le procédé selon l'une quelconque des revendications 1 à 4.

6. Véhicule à moteur (1) comprenant le dispositif de traitement de données (3) selon la revendication 7.

7. Programme d'ordinateur comprenant des instructions qui, lorsque le programme est exécuté par un ordinateur, amènent l'ordinateur à effectuer le procédé selon l'une quelconque des revendications 1 à 4.

8. Support lisible par ordinateur comprenant des instructions qui, lorsque les instructions sont exécutées par un ordinateur, amènent l'ordinateur à effectuer le procédé selon l'une quelconque des revendications 1 à 4.
